# EUROPÄISCHE PATENTANMELDUNG

(11) **EP 4 653 713 A1**
(43) Veröffentlichungstag der Anmeldung: **26.11.2025**
(21) Anmeldenummer: 25172141.1
(22) Anmeldetag: 24.04.2025
(51) Int. Cl.: F16B 37/04

(54) **VORRICHTUNG MIT EINER AUFNAHME FÜR EINEN GEWINDEEINSATZ UND VERFAHREN**

(30) Priorität: 21.05.2024 DE 102024114123
(71) Anmelder: Lufthansa Technik AG, 22335 Hamburg (DE)
(72) Erfinder: THEIß, Collin, 23560 Lübeck (DE); NELLE, Jan, 22532 Hamburg (DE)
(74) Vertreter: Müller Verweyen

(57) **Zusammenfassung**

Die Erfindung betrifft eine Vorrichtung (40) mit wenigstens einem Bauteil (30) mit wenigstens einer integralen Aufnahme (31) für einen Gewindeeinsatz (10), wobei die Aufnahme (31) eine Durchgangsbohrung (32) durch das Bauteil (30) umfasst. Die Aufnahme (31) weist auf wenigstens einer Seite einen Hinterschnitt (35) zum Halten eines Abschnitts (19) eines Gewindeeinsatzes (10) auf, wobei die Aufnahme (31) zwei seitliche Anlageflächen (34) aufweist, welche jeweils zur seitlichen Anlage an seitliche Kantenflächen (20) eines Gewindeeinsatzes (10) eingerichtet sind. Die Aufnahme (31) weist eine integrale Federzunge (39) zur Verrastung eines Gewindeeinsatzes (10) in der Aufnahme (31) oder einen integralen Rastmittelträger (36) mit einem Rastelement (37) auf, wobei unter dem Rastmittelträger (36) eine Federzunge (15) eines Gewindeeinsatz (10) einführbar und verrastbar ist.

## Beschreibung

Die vorliegende Erfindung betrifft eine Vorrichtung mit wenigstens einem Bauteil mit wenigstens einer integralen Aufnahme für einen Gewindeeinsatz, wobei die Aufnahme eine Durchgangsbohrung durch das Bauteil umfasst. Weiterhin betrifft die Erfindung ein korrespondierendes Verfahren zum Befestigen eines Gewindeeinsatzes.

Gewindeeinsätze werden beispielsweise bei additiv gefertigten Bauteilen oder bei Bauteilen, die in Spritzgussverfahren gefertigt werden, genutzt, um ein Gewinde für eine Schraubverbindung zur Montage des Bauteils vorzusehen. Derartige Bauteile sind in der Regel aus Kunststoff gefertigt. Direkt in das Bauteil geschnittene Gewinde sind aufgrund der Festigkeit und Steifigkeit des Kunststoffs dementsprechend nur begrenzt belastbar. Weiterhin ist das direkte Schneiden des Gewindes in das Bauteil häufig relativ aufwendig und arbeitsintensiv im Verhältnis zur Herstellung des Bauteils, beispielsweise im Spritzgussverfahren oder 3D-Druck.

Es sind weiterhin Einschmelzgewinde bekannt, welche bei thermoplastischen Werkstoffen des Bauteils genutzt werden können, um einen Gewindeeinsatz durch Erwärmung in das Bauteil einzubringen. Bei Werkstoffen, die nicht aufgeschmolzen werden können, beispielsweise Duroplasten, können Gewindeeinsätze oder auch Gewindemuttern in eine Öffnung des Bauteils eingesteckt werden. Für eine verliersichere Anbringung der Gewindeeinsätze und die Übertragung der Kräfte in das Bauteil werden die Gewindeeinsätze in der Regel eingeklebt. Insgesamt ergibt sich bei diesen Lösungen ein hoher Zeitaufwand für das Einsetzen und Befestigen der Gewindeeinsätze. Weiterhin kann es bei diesen zusätzlichen Arbeitsschritten leicht zu Montagefehlern kommen. Zudem muss das Einschmelzen oder Verkleben der Gewindeeinsätze von einer Fachkraft ausgeführt werden. Dies führt insgesamt zu hohen Kosten und langen Fertigungszeiten.

Es ist daher die Aufgabe der vorliegenden Erfindung eine Vorrichtung mit einem Bauteil anzugeben, die die oben genannten Nachteile überkommt. Weiterhin ist es die Aufgabe ein entsprechendes Verfahren zur Herstellung einer solchen Vorrichtung anzugeben.

Die Aufgabe wird durch die Merkmale der unabhängigen Ansprüche gelöst. Weitere bevorzugte Ausführungsformen der Erfindung sind den Unteransprüchen, den Figuren und der dazugehörigen Beschreibung zu entnehmen.

Es wird eine Vorrichtung mit wenigstens einem Bauteil mit wenigstens einer integralen Aufnahme für einen Gewindeeinsatz vorgeschlagen, wobei die Aufnahme eine Durchgangsbohrung durch das Bauteil umfasst. Die Aufnahme weist auf wenigstens einer Seite einen Hinterschnitt zum Halten eines Abschnitts, insbesondere überstehenden Kragenabschnitts, eines Gewindeeinsatzes auf. Die Aufnahme weist zwei seitliche Anlageflächen auf, welche jeweils zur seitlichen Anlage an seitliche Kantenflächen eines Gewindeeinsatzes, insbesondere zur seitlichen Anlage an einer Federzunge eines Gewindeeinsatzes, eingerichtet sind. Die Aufnahme weist eine integrale Federzunge zur Verrastung eines Gewindeeinsatzes in der Aufnahme oder alternativ einen integralen Rastmittelträger mit einem Rastelement auf, wobei unter dem Rastmittelträger eine Federzunge eines Gewindeeinsatz einführbar und verrastbar ist.

Das Bauteil der Vorrichtung ist mit der Aufnahme integral und kann beispielsweise durch eine additive Fertigung oder 3D-Druck oder alternativ durch ein Spritzgussverfahren gefertigt sein. In einem vorteilhaften Ausführungsbeispiel besteht das Bauteil mit der wenigstens einen Aufnahme aus einem Polymerwerkstoff.

Mit dem Hinterschnitt, in den vorzugsweise ein Kragenabschnitt des Gewindeeinsatzes eingesetzt werden kann, kann ein eingesetzter Gewindeeinsatz in Richtung der Gewindeachse an dem Bauteil durch Formschluss gesichert werden. Der Hinterschnitt ist in vorteilhaften Ausführungsformen halbkreisförmig. Weiterhin verhindert der Hinterschnitt vorzugsweise auch ein seitliches Verkippen des Gewindeeinsatzes.

Die seitlichen Anlageflächen der Aufnahme sind vorzugsweise parallel und können beispielsweise durch Stege auf dem Bauteil gebildet sein. Die bei einer Verschraubung in den Gewindeeinsatz eingebrachten Momente können über die Kantenflächen des Gewindeeinsatzes, insbesondere die Kantenflächen der Federzunge des Gewindeeinsatzes in die seitliche Anlageflächen, vorzugsweise über die Stege, in das Bauteil geleitet werden. Dementsprechend kann ein Gewindeeinsatz auch gegen höhere Momente verdrehgesichert gelagert werden.

Eine integrale Federzunge der Aufnahme besteht vorzugsweise aus dem gleichen Material wie das Bauteil, so dass eine kostengünstige Fertigung und einfache Bauteillogistik möglich sind. Der Gewindeeinsatz kann beispielsweise unter elastischer Verformung der integralen Federzunge der Aufnahme in die Aufnahme eingeschoben und durch die integrale Federzunge in der Aufnahme gegen Verlieren verrastet werden. Die integrale Federzunge kann somit mit ihrem freien Ende gegen den Gewindeeinsatz anliegen und den Gewindeeinsatz auf diese Weise in der Aufnahme des Bauteils sichern.

In einer vorteilhaften Ausführungsform ist der Rastmittelträger der wenigstens einen Aufnahme des Bauteils eine Brücke. Eine Federzunge eines Gewindeeinsatzes kann unter die Brücke eingesetzt werden, wobei die Brücke ein Rastelement aufweist. Die Brücke dient zur Sicherung eines Gewindeeinsatzes in einem nicht verschraubten Zustand, wobei die Brücke einerseits die Federzunge parallel zur Gewindeachse an dem Bauteil sichert und gleichzeitig ein Rastelement für eine Clipverbindung mit der Federzunge eines Gewindeeinsatzes aufweist, so dass die Federzunge in der Ebene der Federzunge, parallel zu den Zungenflächen gesichert werden kann. Dies verhindert weiterhin ein Herausrutschen des Gewindeeinsatzes, insbesondere eines Kragenabschnitts, aus dem Hinterschnitt.

In einer alternativen Ausführungsform ist der Rastmittelträger der wenigstens einen Aufnahme des Bauteils eine Tasche. Hierdurch kann ein freies Ende einer Federzunge des Gewindeeinsatzes abgedeckt werden, so dass in dieser Ausführungsform ein Lösen des Gewindeeinsatzes erheblich erschwert oder verhindert werden kann.

In einer vorteilhaften Ausführungsform ist das Rastelement des Rastmittelträgers auf der Unterseite des Rastmittelträgers zum Körper des Bauteils hin angeordnet, wobei das Rastelement eine Rastnase ist. Die Rastnase kann vorzugsweise in ein Rastloch einer Federzunge eines Gewindeeinsatzes eingreifen, so dass eine federbelastete Clipverbindung oder Rastverbindung einer Federzunge eines Gewindeeinsatzes mit der Rastnase des Rastmittelträgers gebildet werden kann.

Gemäß einer Weiterentwicklung wird vorgeschlagen, dass das Bauteil eine Stütze für eine Federzunge eines Gewindeeinsatzes aufweist, welche zwischen der Durchgangsbohrung des Bauteils und dem Rastmittelträger endet.

Die Stütze bildet dementsprechend ein Plateau, auf der der Gewindeeinsatz mit dem Gewindeabschnitt und Teilen der Federzunge des Gewindeeinsatzes aufliegen kann, während das freie Ende der Federzunge hinter dem Ende der Stütze zum Bauteil hin elastisch ausgelenkt werden kann.

Vorzugsweise erstrecken sich die beiden seitlichen Anlageflächen geradlinig, und vorzugsweise parallel, über eine Strecke ausgehend vom Lotfußpunkt zur Mittelachse der Durchgangsbohrung, wobei die Strecke wenigstens einem Durchmesser der Durchgangsbohrung durch das Bauteil entspricht. Die Strecke kann ferner beispielsweise einer Strecke wenigstens dem 1,5-fachen Durchmesser der Durchgangsbohrung durch das Bauteil entsprechen.

Hierdurch wird ein ausreichend großer Hebel erreicht, so dass die Materialbelastung an den seitlichen Anlageflächen reduziert und größere Momente von dem Gewindeabschnitt übertragen werden können.

Gemäß einer Weiterentwicklung wird vorgeschlagen, dass die Durchgangsbohrung der wenigstens einen Aufnahme des Bauteils zwischen dem Hinterschnitt und dem Rastmittelträger angeordnet ist.

Vorzugsweise weist die wenigstens eine Aufnahme an den seitlichen Anlageflächen jeweils einen Hinterschnitt zum Halten eines Abschnitts, insbesondere überstehenden Kragenabschnitts, des Gewindeeinsatzes auf.

Die Hinterschnitte an den seitlichen Anlageflächen können sich beispielsweise direkt an einen Hinterschnitt zwischen den seitlichen Anlageflächen an einem Hinterschnitt am Ende des Einschubs für den Gewindeeinsatz anschließen. In möglichen vorteilhaften Ausführungsformen können sich die seitlichen Hinterschnitte halbkreisförmig aneinander anschließen.

Vorzugsweise ist in wenigstens einer Aufnahme des Bauteils ein Gewindeeinsatz unter Ausbildung einer Rastverbindung verliersicher befestigt. Der Gewindeeinsatz weist einen Gewindeabschnitt mit einer Bohrung, vorzugsweise einer Durchgangsbohrung, entlang einer Gewindeachse auf, wobei in der Bohrung ein Innengewinde vorgesehen ist.

Dementsprechend kann der Gewindeeinsatz, der vorzugsweise aus Metall ist, sehr schnell und einfach in ein entsprechendes Bauteil, welches vorzugsweise aus Kunststoff ist, eingesetzt werden. Die Montage erfordert weder spanende Bearbeitung, Klebstoff noch Erhitzung, so dass die Montage auch von Arbeitskräften ohne höhere Qualifikation möglich ist. Weitere Hilfsmittel für die Montage sind nicht notwendig. Die Kontrolle der Verbindung des Gewindeeinsatzes mit einem Bauteil kann zudem durch eine einfache Sichtprüfung erreicht werden. Weiterhin kann ein beschädigtes Gewinde sehr schnell und ohne Beeinträchtigung des Bauteils getauscht werden.

Darüber hinaus kann der vorgeschlagene Gewindeeinsatz höhere Lasten übertragen als dies mit üblichen Gewindeeinsätzen aus dem Stand der Technik, welche beispielsweise eingeschmolzen werden, möglich ist.

Die Vorrichtung kann sehr günstig hergestellt werden, wobei beispielsweise an einem additiv gefertigten Bauteil in einem einfachen Prozessschritt durch Einclippen oder Einrasten Gewindeeinsätze montiert werden können. Das Befestigen von Gewindeeinsätzen an einem Bauteil kann beispielsweise unmittelbar nach dessen Fertigstellung manuell erfolgen, ohne dass ein dezidierter Bearbeitungsprozess entwickelt werden muss. Die Vorrichtung kann in diesem Zusammenhang auch als System von wenigstens einem Gewindeeinsatz und einem Bauteil bezeichnet werden.

Vorzugsweise ist die Aufnahme dazu eingerichtet, dass der Gewindeeinsatz in einer Raumrichtung senkrecht zur Durchgangsbohrung des Bauteils verschiebbar ist, wobei durch Herstellen einer Rastverbindung die Verschiebbarkeit in dieser Raumrichtung zwischen dem Bauteil und dem Gewindeeinsatz blockiert ist.

In einer vorteilhaften Ausführungsform weist der Gewindeeinsatz eine Federzunge auf, welche mit dem Gewindeabschnitt verbunden ist, wobei die Gewindeachse des Gewindeabschnitts senkrecht zu Zungenflächen der Federzunge steht, und wobei die Federzunge ein Rastelement aufweist.

Die Federzunge des Gewindeeinsatzes ist vorzugsweise integral mit dem Gewindeabschnitt verbunden. Mit der Federzunge und dessen Rastelement kann der Gewindeeinsatz unverlierbar und rotationsfest in einer Aufnahme eines Bauteils gesichert werden. Die Federzunge weist in Bezug zu Richtungen in der Ebene ihrer Zungenflächen ein ausreichendes Flächenträgheitsmoment und Steifigkeit auf, um Momente, die in den Gewindeabschnitt eingebracht werden, über die Kantenflächen in eine anliegende Aufnahme eines Bauteils zu übertragen, so dass eine Rotation des Gewindeeinsatzes um die Gewindeachse unterbunden wird. Die Federzunge bildet somit einen Hebel an dem Gewindeabschnitt, der sich ausgehend von dem Innengewinde in Radialrichtung in Bezug auf die Gewindeachse des Innengewindes erstreckt. Der Gewindeeinsatz ist somit gegen Verdrehen gesichert. Bei einer Montage ist daher kein Gegenhalten mit einem Schraubenschlüssel auf der Rückseite einer zu montierenden Vorrichtung notwendig. Die Verbindung von Federzunge und Gewindeabschnitt kann beispielsweise durch Schweißen erfolgen.

Das Rastelement an der Federzunge kann aufgrund der leichten Verformbarkeit und geringen Steifigkeit der Federzunge senkrecht zu ihren Zungenflächen leicht an einer entsprechenden Aufnahme an einem Bauteil verrastet werden. Der Gewindeeinsatz kann daher in einfacher Weise verliersicher an einem Bauteil fixiert werden, wobei der Gewindeabschnitt des Gewindeeinsatzes zur Herstellung einer Verschraubung zur Verfügung steht.

In einer vorteilhaften Ausführungsform ist das Rastelement der Federzunge ein Rastloch. Das Rastloch kann sehr günstig hergestellt werden, beispielsweise durch einen Stanzvorgang. Vorzugsweise wird das Rastloch zusammen mit der Kontur der Federzunge hergestellt. Durch das Rastloch kann zudem das Gewicht reduziert werden, in dem die vorzugsweise metallische Rastzunge mit hoher Dichte leichter wird, während eine korrespondierende Rastnase eines Bauteils aus Kunststoff eine geringere Dichte aufweist. In einer alternativen Ausführungsform ist das Rastelement der Federzunge eine Ausprägung in der Zungenfläche der Federzunge.

Gemäß einer Weiterentwicklung wird vorgeschlagen, dass der Gewindeeinsatz gegenüberliegend zur Federzunge des Gewindeeinsatzes einen überstehenden Kragenabschnitt aufweist. Der Kragenabschnitt dient zur Sicherung des Gewindeeinsatzes in Richtung der Gewindeachse von dem Bauteil weg, so dass der in eine Aufnahme eines Bauteils eingesetzte Gewindeeinsatz durch Formschluss in dieser Richtung gegen Verlieren gesichert ist. In der anderen Richtung der Gewindeachse liegt der Gewindeeinsatz auf dem Bauteil auf. Bei einer Verschraubung des Gewindeeinsatzes wird dieser durch die Verschraubung von der anderen Seite des Bauteils an das Bauteil gedrückt.

Vorzugsweise weist die Federzunge des Gewindeeinsatzes eine Länge auf, welche wenigstens dem 1,5-fachen, vorzugsweise wenigstens dem 2,5-fachen, des Durchmessers der Bohrung des Gewindeabschnitts entspricht. Hierdurch kann eine ausreichende Hebelwirkung der Federzunge zur Verdrehsicherung des Gewindeeinsatzes gegen bei der Verschraubung eingebrachte Momente erreicht werden. Das Ende der Federzunge ist vorzugsweise abgerundet.

Gemäß einer vorteilhaften Weiterentwicklung ist die Aufnahme dazu eingerichtet, dass der Gewindeeinsatz in einer Raumrichtung senkrecht zur Durchgangsbohrung des Bauteils verschiebbar ist, wobei durch Herstellen einer Rastverbindung die Verschiebbarkeit in dieser Raumrichtung zwischen dem Bauteil und dem Gewindeeinsatz blockiert ist.

Die Verschiebbarkeit ermöglicht die Montage und Demontage des Gewindeeinsatzes in der Aufnahme des Bauteils, wobei die Federzunge des Gewindeeinsatzes in vorteilhaften Ausführungsformen zunächst in einer angewinkelten Ausrichtung unter den Rasmittelträger der Aufnahme geschoben wird. Der Gewindeabschnitt wird anschließend unter elastischer Verformung der Federzunge des Gewindeeinsatzes auf die Aufnahme gedrückt, so dass die Gewindeachse des Gewindeeinsatzes und die Achse der entsprechenden Durchgangsbohrung parallel verlaufen. Der Gewindeeinsatz kann anschließend senkrecht zur Durchgangsbohrung des Bauteils verschoben werden, so dass die Gewindeachse des Gewindeabschnitts koaxial mit der Achse der Durchgangsbohrung des Bauteils verläuft. Gleichzeitig wird bei der Verschiebung in bevorzugten Ausführungsformen der Kragenabschnitt des Gewindeeinsatzes unter den Hinterschnitt der Aufnahme verschoben, so dass dieser durch einen Formschluss in Richtung der beiden Achsen gesichert ist. Durch die Verschiebung in diese Position stellt sich selbsttätig eine Rastverbindung zwischen der Federzunge und der Aufnahme ein, wobei in bevorzugten Ausführungsbeispielen eine Rastnase unterhalb des Rastmittelträgers, vorzugsweise in Form einer Brücke, in ein Rastloch der Federzunge eingreift. Hierdurch wird die elastische Verformung der Federzunge durch das Andrücken des Gewindeabschnitts zuvor bei der Montage weitgehend oder vollständig aufgelöst.

In bevorzugten Ausführungsformen ist die Federzunge des Gewindeeinsatzes unter dem Rastmittelträger eingeführt und verrastet, wobei das freie Ende der Federzunge des Gewindeeinsatzes hinter dem Rastmittelträger in Form einer Brücke hervorsteht. Dies ermöglicht ein einfaches Aufheben der Rastverbindung durch Drücken auf das freie Ende der Federzunge des Gewindeeinsatzes, so dass der Gewindeeinsatz zerstörungsfrei ausgewechselt werden kann. Durch Drücken auf das Ende der Federzunge wird die Federzunge elastisch verformt und die Rastverbindung zwischen Rastmittelträger, hier eine Brücke, und Federzunge, insbesondere zwischen Rastnase und Rastloch, aufgehoben. Vorzugsweise ist der Gewindeeinsatz mit Federzunge durch eine Kippbewegung aus der Aufnahme entfernbar und/oder einsetzbar, wenn die Rastverbindung aufgehoben ist. Sofern die Rastverbindung aufgehoben ist, kann der zuvor beschriebene Montageprozess in umgekehrter Reihenfolge durchgeführt werden, so dass der Gewindeeinsatz zerstörungsfrei wieder vom Bauteil getrennt werden kann.

In einer weiteren Ausführungsform der Vorrichtung ist der Gewindeeinsatz eine Vierkantmutter, wobei die integrale Federzunge der Aufnahme gegen eine Kantefläche der Vierkantmutter zur Verrastung des Gewindeeinsatzes in der Aufnahme anliegt.

Weiterhin wird die Aufgabe der Erfindung durch ein Verfahren zum Befestigen eines Gewindeeinsatzes an einem Bauteil zur Herstellung einer zuvor beschriebenen Vorrichtung, insbesondere nach einem der Ansprüche 9 bis 15, vorgeschlagen: Das Verfahren weist folgende Schritte auf:
- Einschieben der Federzunge des Gewindeeinsatzes unter den Rastmittelträger der Aufnahme in einer gekippten Ausrichtung;
- Andrücken des Gewindeabschnitts unter elastischer Verformung der Federzunge auf die Aufnahme, so dass die Gewindeachse des Gewindeeinsatzes und die Achse der entsprechenden Durchgangsbohrung parallel sind;
- Verschieben des Gewindeeinsatzes senkrecht zur Durchgangbohrung des Bauteils bis die Gewindeachse des Gewindeabschnitts koaxial mit der Achse der Durchgangsbohrung des Bauteils verläuft, bis der Kragenabschnitt des Gewindeeinsatzes unter dem Hinterschnitt der Aufnahme ist, und bis sich selbsttätig eine Rastverbindung zwischen der Federzunge und dem Rastmittelträger einstellt.

Die Vorteile des beschriebenen Verfahrens entsprechen in ihren Wirkungen und Vorteilen den vorherigen Ausführungen zu den Gegenständen.

Die Erfindung wird im Folgenden anhand bevorzugter Ausführungsformen unter Bezugnahme auf die beigefügten Figuren erläutert. Dabei zeigt
- Fig. 1: eine Schnittdarstellung einer Vorrichtung mit einem Gewindeeinsatz mit Federzunge in einer Aufnahme eines Bauteils;
- Fig. 2: eine Ansicht auf einen Gewindeeinsatz in einer Aufnahme eines Bauteils;
- Fig. 3: eine Vorrichtung mit einem Bauteil und mehreren Aufnahmen für Gewindeeinsätze;
- Fig. 4-6: Schritte bei der Befestigung eines Gewindeeinsatzes mit Federzunge in einer Aufnahme eines Bauteils;
- Fig. 7: ein Bauteil mit einer Aufnahme mit Federzungen und eine Vierkantmutter;
- Fig. 8: eine Vorrichtung mit einem Bauteil und einer Vierkantmutter in einer Aufnahme des Bauteils; und
- Fig. 9: eine Schnittdarstellung einer Vorrichtung mit einem Bauteil und einer Vierkantmutter in einer Aufnahme des Bauteils.

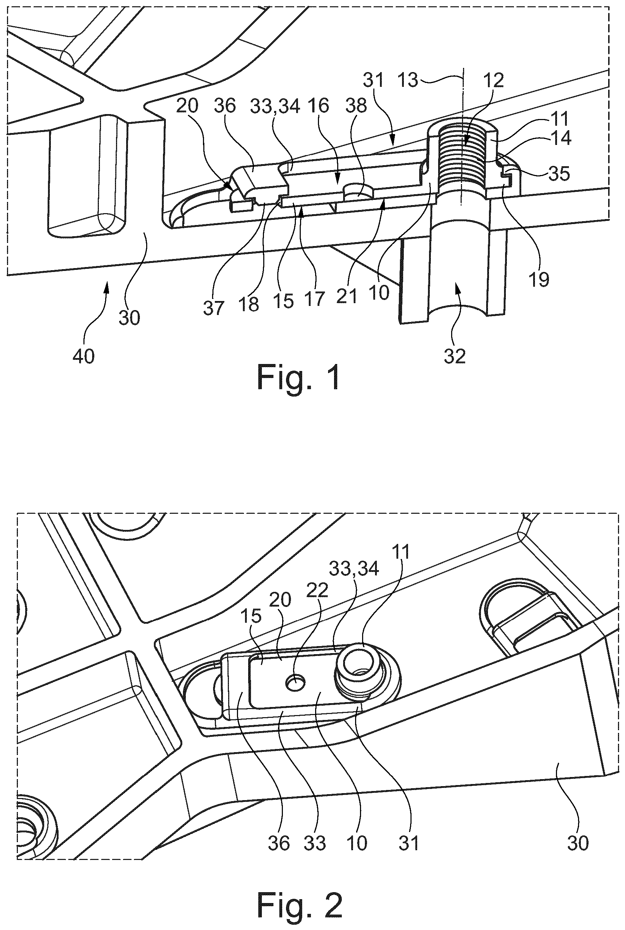

Figur 1 zeigt einen Schnitt durch ein vorteilhaftes Ausführungsbeispiel einer Vorrichtung 40, die aus einem Bauteil 30 mit einer Aufnahme 31 und einem in die Aufnahme 31 eingesetzten Gewindeeinsatz 10 mit Federzunge 15 gebildet wird. Der Gewindeeinsatz 10 ist in der Darstellung der Figur 1 unverlierbar an dem Bauteil 30 montiert.

Der Gewindeeinsatz 10 weist einen Gewindeabschnitt 11 auf, durch den die Bohrung 12 mit einem Innengewinde 14 entlang der Gewindeachse 13 verläuft. Am Gewindeeinsatz 10 ist weiterhin eine Federzunge 15 vorgesehen, die mit dem Gewindeabschnitt 11 verbunden, in diesem vorteilhaften Ausführungsbeispiel stoffschlüssig oder integral verbunden, ist. Der Gewindeeinsatz 10 ist aus Metall. Die Federzunge 15 weist zwei Zungenflächen 16 und 17 auf, wobei die Zungenfläche 16 auf der Oberseite des Gewindeeinsatzes 10 in der Figur 1 zu erkennen ist. Die Zungenflächen 16, 17 der Federzunge 15 sind senkrecht zur Gewindeachse 13 angeordnet. Die Federzunge 10 ist weiterhin an einem axialen Ende des Gewindeabschnitts 11 angeordnet, so dass die Federzunge 15 und der Gewindeabschnitt 11 eine bündige Auflagefläche 21 des Gewindeeinsatzes 10 bilden, wobei die untere Zungenfläche 17 zumindest einen Teil der Auflagefläche 21 bildet.

Die Federzunge 15 weist an ihrem freien Ende ein Rastloch 18 als Rastelement 18 auf, welches in der Darstellung der Figur 1 mit einem Rastelement 37 in Form einer Rastnase unter einem Rastmittelträger 36 in Form einer Brücke der Aufnahme 31 in Eingriff steht. Diese Rastverbindung zwischen dem Rastelement 37 oder auch der Rastnase des Rastmittelträgers 36 und dem Rastloch 18 der Federzunge 15 des Gewindeeinsatzes 10 verhindert eine Relativbewegung parallel zu den Zungenflächen 16, 17. Daher kann durch einen gegenüber der Federzunge 15 auf der anderen Seite des Gewindeabschnitts 11 vorgesehener Abschnitt 19, in dieser vorteilhaften Ausführungsform ein Kragenabschnitt 19, in einem Hinterschnitt 35 der Aufnahme 31 gesichert werden. Der Kragenabschnitt 19, der im Formschluss mit dem Hinterschnitt 35 steht, verhindert eine Separation des Gewindeeinsatzes 10 in Bezug auf das Bauteil 30 in Richtung der Gewindeachse 13.

Weiterhin wird eine Relativbewegung zwischen Gewindeeinsatz 10 und Bauteil 30 durch seitliche Anlageflächen 34 der Aufnahme 31 verhindert, an die die seitlichen Kantenflächen 20 der Federzunge 15 anliegen. Neben dieser Positionssicherung dienen die seitlichen Anlageflächen 34 auf beiden Seiten der Aufnahme 31, siehe auch Figur 2, vor allem zur Aufnahme der Momente, die bei der Verschraubung mit dem Innengewinde 14 der Vorrichtung 40 aus Bauteil 30 und Gewindeeinsatz 10 entstehen. Die seitlichen Anlageflächen 34 erstrecken sich daher in diesem vorteilhaften Ausführungsbeispiel bis zum Rastmittelträger 36, so dass die seitlichen Anlagefläche 34 ausgehend von einem Lotfußpunkt zur Mittelachse der Durchgangsbohrung 32 des Bauteils 30 bzw. zur Gewindeachse 13 des Gewindeeinsatzes 10 bis zum Rastmittelträger 36 erstrecken, so dass die volle Länge der Federzunge 15 für die Übertragung von Momenten bei einer Verschraubung der Vorrichtung 40 am Innengewinde 14 zur Verfügung steht. Die Federzunge 15 weist eine Länge auf, die in diesem Ausführungsbeispiel in etwa dem 3,5-fachen des Durchmessers der Bohrung 12 des Gewindeabschnitts 11 entspricht. Hierdurch wird ein ausreichend langer Hebelarm erreicht, der die Belastung auf das Material der Aufnahme 31 soweit reduziert, dass die entsprechenden Anzugsmomente bei der späteren Verschraubung von der Federzunge 15 in die Aufnahme 31 eingeleitet werden können.

Bei der Verschraubung wird das entstehende Moment auf den Gewindeeinsatz 10 von den seitlichen Anlageflächen 34 der Aufnahme 11, die in diesem Ausführungsbeispiel durch zwei parallele Stege 33 gebildet werden, aufgenommen. Die seitlichen Anlagefläche 34 stehen ausgehend vom zuvor beschriebenen Lotfußpunkt insbesondere in einem Abstand von dem 1,5-fachen des Durchmessers der Durchgangsbohrung 32 mit den Kantenflächen 20 des Gewindeeinsatzes 15, hier der Kantenflächen 20 der Federzunge 15 des Gewindeeinsatzes 15, in Kontakt. Die Kantenflächen 20 der Federzunge 15 werden in diesem vorteilhaften Ausführungsbeispiel über die gesamte Länge der Federzunge 15 bis zur Verrundung am freien Ende der Federzunge 15 durch die seitlichen Anlageflächen 34 gestützt.

Die Aufnahme 31 ist mit dem Bauteil 30 integral gefertigt, in diesem Ausführungsbeispiel durch eine additive Fertigung oder 3D-Druck. In diesem vorteilhaften Ausführungsbeispiel besteht das Bauteil 30 mit der Aufnahme 31 aus einem Polymerwerkstoff. Die Aufnahme 31 umfasst eine Durchgangsbohrung 32, die durch das Bauteil 30 verläuft, und die koaxial zu der Bohrung 12 des angebrachten Gewindeeinsatzes 10 verläuft. Dementsprechend kann die Verschraubung mit einer Schraube, in der Darstellung der Figur 1 von unten, erfolgen, so dass der Gewindeeinsatz 10 durch die Schraube im montierten Zustand der Vorrichtung 40 auf das Bauteil 30 gepresst wird.

Figur 2 zeigt die Vorrichtung 40 mit dem Bauteil 30 und dem Gewindeeinsatz 10 in der integralen Aufnahme 11 des Bauteils 30 in einem Ausschnitt. In dieser Ansicht ist der Rastmittelträger 36 in Form einer Brücke zu erkennen, die die Federzunge 15 überspannt. Die Federzunge 15 weist zudem ein weiteres Loch 22 zwischen Rastloch 18 auf.

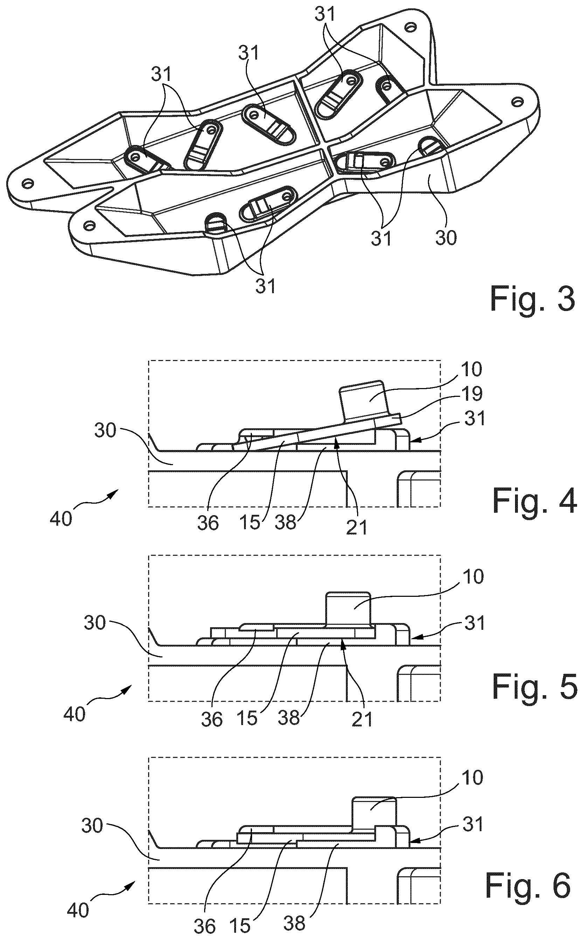

Figur 3 zeigt ein Ausführungsbeispiel eines möglichen additiv gefertigten Bauteils 30 mit mehreren integralen Aufnahmen 31 für Gewindeeinsätze 10.

Die Figuren 4 bis 6 zeigen die Schritte beim Befestigen eines Gewindeeinsatzes 10 in der Aufnahme 31 eines Bauteils 30 in drei Schnittdarstellungen. Die Schnitte der Darstellungen sind zu der Mittelachse der Durchgangsbohrung 32 versetzt.

Figur 4 zeigt das Einschieben der Federzunge 15 eines Gewindeeinsatzes 10 unter den Rastmittelträger 36 der Aufnahme 31 in einer gekippten Ausrichtung.

Im nächsten Schritt, der in Figur 5 dargestellt ist, wird der Gewindeabschnitt 11 unter elastischer Verformung der Federzunge 15 auf die Aufnahme 31 gedrückt, so dass die Auflagefläche 21 des Gewindeeinsatzes 10 auf einer Stütze 38 der Aufnahme 31 aufliegt. In diesem Zwischenzustand sind die Gewindeachse 13 des Gewindeeinsatzes 10 und die Mittelachse der Durchgangsbohrung 32 parallel. In einem letzten Schritt wird der Gewindeeinsatz 15 in der Aufnahme 31 senkrecht zur Durchgangsbohrung 32 des Bauteils 30 verschoben bis sich die Rastverbindung zwischen Rastmittelträger 36 und der Federzunge 15 einstellt.

Wie in Figur 6 zu erkennen ist, ist der Gewindeeinsatz 10 im finalen Zustand mit dem Abschnitt 19, hier der Kragenabschnitt 19, unter dem Hinterschnitt 35 der Aufnahme 31 eingeschoben.

In den Figuren 1 und 6 ist zu erkennen, dass die Stütze 38 zwischen Durchgangsbohrung 32 des Bauteils 30 und dem Rastmittelträger 36 endet, so dass das freie Ende der Federzunge 15 mit dem Rastelement 18, in diesem Ausführungsbeispiel in Form eines Rastlochs 18, hohl liegt. Der gebildete Raum unter dem freien Ende der Federzunge 15 ermöglicht das Einsetzen sowie die zerstörungsfreie Aufhebung der Rastverbindung zwischen dem Rastloch 18 der Federzunge 15 und dem Rastelement 37 des Rastmittelträgers 36 in Form einer Brücke durch Drücken auf das freie Ende der Federzunge 15.

Das freie Ende der Federzunge 15 wird in diesem Fall bis zum Beginn der Stütze 38 der Aufnahme 31 nach unten ausgelenkt, wodurch insgesamt eine Verschiebung des Gewindeeinsatzes 10 in der Aufnahme 31 ermöglicht wird, so dass der Abschnitt 19 aus dem Hinterschnitt 35 bewegt werden kann. Diese Verschiebung erfolgt senkrecht zur Durchgangsbohrung 32 des Bauteils 30, welche im montierten Zustand durch die Rastverbindung blockiert ist. Der Gewindeeinsatz 10 kann anschließend durch eine Kippbewegung entfernt werden. Es ist also ein zerstörungsfreies Auswechseln des Gewindeeinsatzes 10 möglich. Durch die umgekehrte Bewegung kann ein Einsetzen oder Wiedereinsetzen des Gewindeeinsatzes 10 in der Aufnahme erfolgen.

Sofern der Gewindeeinsatz 10 einer Vorrichtung 40 mit einer Schraube verschraubt ist, ist die Verschiebung des Gewindeeinsatzes 10 in dieser Raumrichtung unabhängig vom Zustand der Rastverbindung, d.h. offen oder geschlossen, blockiert.

In einem alternativen Ausführungsbeispiel kann der Rastmittelträger 36 in Form einer Tasche gebildet sein, so dass das freie Ende der Federzunge 15 von dem Rastmittelträger 36 verdeckt ist. In dieser Ausführungsform kann die Rastverbindung zwischen dem Rastelement 37 und dem Rastloch 18 der Federzunge 15 nicht zerstörungsfrei aufgehoben, was je nach Anwendungsfall gewünscht sein kann.

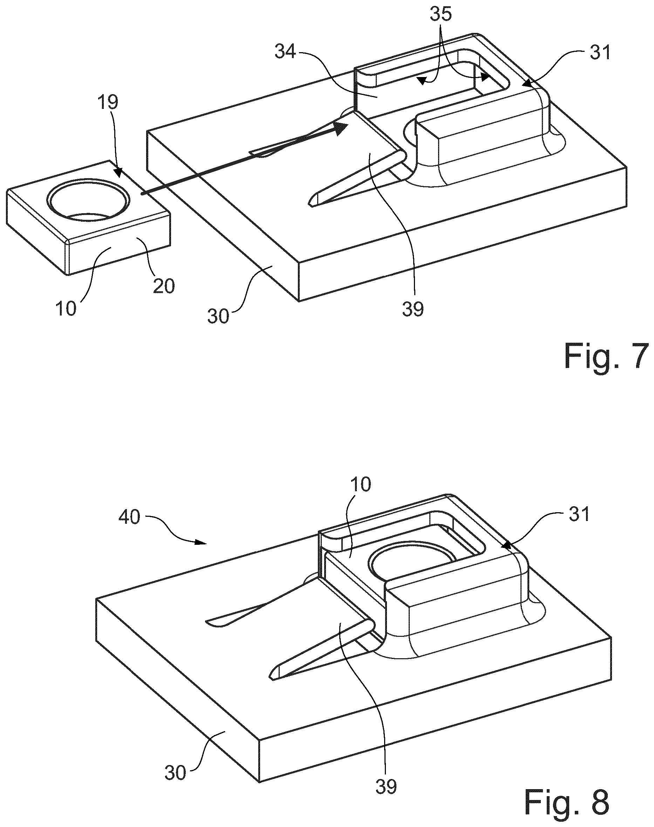

Figur 7 zeigt ein weiteres Ausführungsbeispiel einer Vorrichtung 40 mit einem Bauteil 30, wobei das Bauteil 30 eine integrale Federzunge 39 aufweist, welche zur Verrastung des Gewindeeinsatzes 10, in diesem Ausführungsbeispiel in Form einer Vierkantmutter, eingerichtet ist. Der Gewindeeinsatz 10 wird zur Herstellung der Vorrichtung 40 unter elastischer Verformung der integralen Federzunge 39 der Aufnahme 31 in die Aufnahme 31 eingeschoben, was durch den entsprechenden Pfeil symbolisiert wird.

In Figur 8 ist der Gewindeeinsatz 10 in die Vorrichtung 40 entsprechend der Figur 7 eingesetzt, wobei der Gewindeeinsatz 10 von der integralen Federzunge 39 in der integralen Aufnahme 31 des Bauteils 30 gehalten wird. Der Gewindeeinsatz 10 steht somit für eine Verschraubung der Vorrichtung 40 mit weiteren Teilen zur Verfügung. Die seitlichen Kantenflächen 20 liegen in diesem verrasteten Zustand an den seitlichen Anlagefläche 34 der Aufnahme 31 an. Weiterhin wird der Abschnitt 19 auf der Oberseite des Gewindeeinsatzes 10 von dem Hinterschnitt 35 gehalten, so dass der Gewindeeinsatz 10 verliersicher an dem Bauteil 30 gesichert ist.

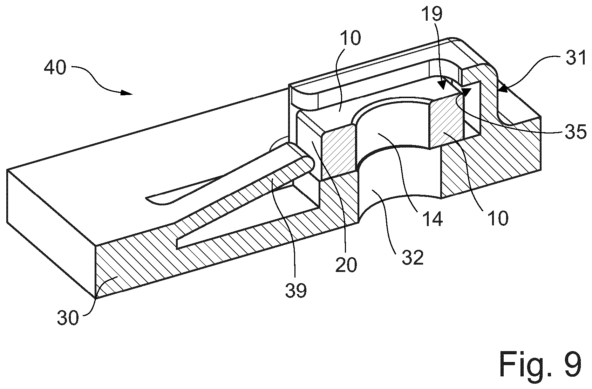

Figur 9 zeigt eine Schnittdarstellung der Vorrichtung 40 aus Figur 8. Das Innengewinde 14 des Gewindeeinsatzes 10 steht über die Durchgangbohrung 32 für eine Verschraubung der Vorrichtung 40 mit weiteren Teilen zur Verfügung. Die integrale Federzunge 39 der Aufnahme 31 liegt in dieser Ausführungsform im verrasteten Zustand an einer Kantenfläche 20 des Gewindeeinsatzes 10 an und sichert den Gewindeeinsatz 10.

## Patentansprüche

1. Vorrichtung (40) mit wenigstens einem Bauteil (30) mit wenigstens einer integralen Aufnahme (31) für einen Gewindeeinsatz (10), wobei die Aufnahme (31) eine Durchgangsbohrung (32) durch das Bauteil (30) umfasst, **dadurch gekennzeichnet, dass**
- die Aufnahme (31) auf wenigstens einer Seite einen Hinterschnitt (35) zum Halten eines Abschnitts (19), insbesondere überstehenden Kragenabschnitts (19), eines Gewindeeinsatzes (10) aufweist, wobei
- die Aufnahme (31) zwei seitliche Anlageflächen (34) aufweist, welche jeweils zur seitlichen Anlage an seitliche Kantenflächen (20) eines Gewindeeinsatzes (10), insbesondere zur seitlichen Anlage an einer Federzunge (15) eines Gewindeeinsatzes (10), eingerichtet sind, wobei die Aufnahme (31)
- eine integrale Federzunge (39) zur Verrastung eines Gewindeeinsatz (10) in der Aufnahme (31), oder
- einen integralen Rastmittelträger (36) mit einem Rastelement (37) aufweist, wobei unter dem Rastmittelträger (36) eine Federzunge (15) eines Gewindeeinsatz (10) einführbar und verrastbar ist.

2. Vorrichtung (40) nach Anspruch 1, **dadurch gekennzeichnet, dass** der Rastmittelträger (36) der wenigstens einen Aufnahme (31) des Bauteils (30) eine Brücke ist.

3. Vorrichtung (40) nach Anspruch 1, **dadurch gekennzeichnet, dass** der Rastmittelträger (36) der wenigstens einen Aufnahme (31) des Bauteils (30) eine Tasche ist.

4. Vorrichtung (40) nach einem der vorangehenden Ansprüche, **dadurch gekennzeichnet, dass** das Rastelement (37) des Rastmittelträgers (36) auf der Unterseite des Rastmittelträgers (36) zum Körper des Bauteils (30) hin angeordnet ist, wobei das Rastelement (37) eine Rastnase ist.

5. Vorrichtung (40) nach einem der vorangehenden Ansprüche, **dadurch gekennzeichnet, dass** das Bauteil (30) eine Stütze (38) für eine Federzunge (15) eines Gewindeeinsatzes (10) aufweist, welche zwischen der Durchgangsbohrung (32) des Bauteils (30) und dem Rastmittelträger (36) endet.

6. Vorrichtung (40) nach einem der vorangehenden Ansprüche, **dadurch gekennzeichnet, dass** sich die beiden seitlichen Anlageflächen (34) geradlinig, und vorzugsweise parallel, über eine Strecke ausgehend vom Lotfußpunkt zur Mittelachse der Durchgangsbohrung (32) erstrecken, wobei die Strecke wenigstens einem Durchmesser der Durchgangsbohrung (32) durch das Bauteil (30) entspricht.

7. Vorrichtung (40) nach einem der vorangehenden Ansprüche, **dadurch gekennzeichnet, dass** die Durchgangsbohrung (32) der wenigstens einen Aufnahme (31) des Bauteils (30) zwischen dem Hinterschnitt (35) und dem Rastmittelträger (36) angeordnet ist.

8. Vorrichtung (40) nach einem der vorangehenden Ansprüche, **dadurch gekennzeichnet, dass** die wenigstens eine Aufnahme (31) an den seitlichen Anlageflächen (34) jeweils einen Hinterschnitt zum Halten eines Abschnitts (19), insbesondere überstehenden Kragenabschnitts (19), des Gewindeeinsatzes (10) aufweist.

9. Vorrichtung (40) nach einem der vorangehenden Ansprüche, **dadurch gekennzeichnet, dass** in wenigstens einer Aufnahme (31) des Bauteils (30) ein Gewindeeinsatz (10) unter Ausbildung einer Rastverbindung verliersicher befestigt ist, und der Gewindeeinsatz (10) einen Gewindeabschnitt (11) mit einer Bohrung (12), vorzugsweise einer Durchgangsbohrung (12), entlang einer Gewindeachse (13) aufweist, wobei in der Bohrung (12) ein Innengewinde (14) vorgesehen ist.

10. Vorrichtung (40) nach Anspruch 9, **dadurch gekennzeichnet, dass** der Gewindeeinsatz (10) eine Federzunge (15) aufweist, welche mit dem Gewindeabschnitt (11) verbunden ist, wobei die Gewindeachse (13) des Gewindeabschnitts (11) senkrecht zu Zungenflächen (16, 17) der Federzunge (15) steht, und wobei die Federzunge (15) ein Rastelement (18) aufweist.

11. Vorrichtung (40) nach Anspruch 10, **dadurch gekennzeichnet, dass** das Rastelement (18) der Federzunge (15) ein Rastloch (18) ist.

12. Vorrichtung (40) nach einem der Ansprüche 10 oder 11, **dadurch gekennzeichnet, dass** der Gewindeeinsatz (10) gegenüberliegend zur Federzunge (15) des Gewindeeinsatzes (10) einen überstehenden Kragenabschnitt (19) aufweist.

13. Vorrichtung (40) nach einem der Ansprüche 10 bis 12, **dadurch gekennzeichnet, dass** die Federzunge (15) des Gewindeeinsatzes (10) eine Länge aufweist, welche wenigstens dem 1,5-fachen, vorzugsweise wenigstens dem 2,5-fachen, des Durchmessers der Bohrung (12) des Gewindeabschnitts (11) entspricht.

14. Vorrichtung (40) nach einem der Ansprüche 10 bis 13, **dadurch gekennzeichnet, dass** die Aufnahme (31) dazu eingerichtet ist, dass der Gewindeeinsatz (10) in einer Raumrichtung senkrecht zur Durchgangsbohrung (32) des Bauteils (30) verschiebbar ist, wobei durch Herstellen einer Rastverbindung die Verschiebbarkeit in dieser Raumrichtung zwischen dem Bauteil (30) und dem Gewindeeinsatz (10) blockiert ist.

15. Vorrichtung (40) nach einem der Ansprüche 10 bis 14 unter Rückbezug auf Anspruch 2, **dadurch gekennzeichnet, dass** die Federzunge (15) des Gewindeeinsatzes (10) unter dem Rastmittelträger (36) eingeführt und verrastet ist, wobei das freie Ende der Federzunge (15) des Gewindeeinsatzes (10) hinter dem Rastmittelträger (36) in Form einer Brücke hervorsteht.

16. Vorrichtung (40) nach Anspruch 9, **dadurch gekennzeichnet, dass** Gewindeeinsatz (10) eine Vierkantmutter ist, wobei die integrale Federzunge (39) der Aufnahme (31) gegen eine Kantenfläche (20) der Vierkantmutter zur Verrastung des Gewindeeinsatzes (10) in der Aufnahme (31) anliegt.

17. Verfahren zum Befestigen eines Gewindeeinsatzes (10) an einem Bauteil (30) zur Herstellung einer Vorrichtung (40) nach einem der Ansprüche 9 bis 15, **gekennzeichnet durch** die Schritte:
- Einschieben der Federzunge (15) des Gewindeeinsatzes (10) unter den Rastmittelträger (36) der Aufnahme (31) in einer gekippten Ausrichtung;
- Andrücken des Gewindeabschnitts (11) unter elastischer Verformung der Federzunge (15) auf die Aufnahme (31), so dass die Gewindeachse (13) des Gewindeeinsatzes (10) und die Mittelachse der entsprechenden Durchgangsbohrung (32) parallel sind;
- Verschieben des Gewindeeinsatzes (10) senkrecht zur Durchgangbohrung (32) des Bauteils (30) bis die Gewindeachse (13) des Gewindeabschnitts (11) koaxial mit der Achse der Durchgangsbohrung (32) des Bauteils (30) verläuft, bis der Kragenabschnitt (19) des Gewindeeinsatzes (11) unter dem Hinterschnitt (35) der Aufnahme (31) ist, und bis sich selbsttätig eine Rastverbindung zwischen der Federzunge (15) und dem Rastmittelträger (36) einstellt.
